# EUROPÄISCHE PATENTSCHRIFT

(11) **EP 2 509 699 B1**
(45) Veröffentlichungstag und Bekanntmachung des Hinweises auf die Patenterteilung: **02.03.2016**
(21) Anmeldenummer: 10788049.4
(22) Anmeldetag: 30.11.2010
(51) Int. Cl.: B01D 46/52, B01D 46/24, F02M 35/024, F02M 35/02

(54) **FILTERELEMENT UND LUFTFILTER**
FILTER ELEMENT AND AIR FILTER
ELÉMENT FILTRANT ET FILTRE À AIR

(30) Priorität: 07.12.2009 DE 202009016500 U
(43) Veröffentlichungstag der Anmeldung: 17.10.2012
(73) Patentinhaber: Mahle International GmbH, 70376 Stuttgart (DE)
(72) Erfinder: JOLLIFFE, Paul, Craven Arms Shropshire SY7 9DT (GB); VON MERKATZ, Hendrik, 71686 Remseck (DE)
(74) Vertreter: BRP Renaud & Partner mbB Rechtsanwälte Patentanwälte Steuerberater
(86) Internationale Anmeldenummer: PCT/EP2010/068515
(87) Internationale Veröffentlichungsnummer: WO 2011/069864

(56) Entgegenhaltungen:
- WO-A1-2009/014982
- WO-A2-2008/157251
- DE-U1-202008 010 504
- US-B1- 6 949 155

## Beschreibung

Die vorliegende Erfindung betrifft ein Filterelement, insbesondere für einen Luftfilter einer Frischluftanlage einer Brennkraftmaschine, mit den Merkmalen des Oberbegriffs des Anspruchs 1. Die Erfindung betrifft außerdem einen ein derartiges Filteremelement aufweisendes Luftfilter für eine Frischluftanlage einer Brennkraftmaschine, insbesondere in einem Straßenfahrzeug.

Ein Luftfilter kann grundsätzlich ein Filtergehäuse aufweisen, in dem ein Filterelement angeordnet ist und dadurch im Filtergehäuse eine Rohseite von einer Reinseite trennt. Das Filterelement kann dabei einen ringförmigen Filterkörper aus einem gefalteten Filtermaterial aufweisen. Dabei besitzt das gefaltete oder plissierte Filtermaterial zwei Endfalten oder Endabschnitte, die in der Umfangsrichtung des ringförmigen Filterkörpers benachbart sind und aneinander befestigt sind. Zur Befestigung der beiden Endfalten aneinander ist es grundsätzlich möglich, die Endfalten miteinander zu Verkleben oder miteinander zu Verschweißen oder mittels wenigstens einer Klammer aneinander zu befestigen.

Der Filterkörper besitzt aufgrund der Befestigung der Endfalten aneinander im Bereich der aneinander befestigen Endfalten einen anderen, nämlich einen erhöhten Durchströmungswiderstand als in den anderen Bereichen, da die aneinander befestigten Endfalten, dort zu einer gewissen Abdichtung des Filtermaterials führen. Insoweit ergibt sich in Umfangsrichtung des Filterkörpers eine inhomogene Verteilung des Durchströmungswiderstands.

Bei bestimmten Anwendungen kann es auf ein symmetrisches Strömungsbild stromab des Filterelements ankommen. Beispielsweise kann in einer Frischluftanlage stromab des Filterelements ein Luftmassensensor, insbesondere in Form eines Heißfilmmessers, angeordnet sein, um bspw. für eine Motorsteuerung die aktuell strömende Luftmenge zu erfassen. Wenn es aus irgendwelchen Gründen erforderlich ist, diesen Luftmassensensor relativ nahe am Filterelement zu positionieren, kann die relative Drehlage des Filterelements im Filtergehäuse einen Einfluss auf die Messung des Luftmassensensors haben. Um den Einfluss der Drehlage des Filterelements auf die Luftmassenmessung zu reduzieren, ist es möglich, den Luftmassensensor erst bei eingebautem Filterelement zu kalibrieren. Dies mag bei der Erstausstattung eines Fahrzeugs noch mit einem vertretbaren Aufwand realisierbar sein, jedoch nicht für den Fall, dass das Filterelement im Rahmen einer Inspektion ausgetauscht wird. Das neu eingesetzte Filterelement hat dann regelmäßig eine andere relative Drehlage gegenüber dem Filtergehäuse und somit auch gegenüber dem Luftmassensensor, was eine erneute Kalibrierung des Luftmassensensors erforderlich macht. Der Aufwand hierzu ist vergleichsweise hoch und kann insbesondere die Materialkosten für das neue Filterelement sowie die Lohnkosten für den Austausch des Filterelements übersteigen.

Aus der WO 2008/157251 A2 ist ein Filterelement für eine Kurbelgehäuseentlüftuganlage einer Brennkraftmaschine bekannt, das einen ringförmigen Filterkörper aus einem Filtermaterial und zumindest eine Endscheibe aufweist, die an einer axialen Stirnseite des Filterkörpers am Filtermaterial befestigt ist, wobei zumindest eine solche Endscheibe wenigstens eine von der jeweiligen Endscheibe axial abstehende Ausrichtkontur aufweist.

Aus der US 6 949 155 B1 ist ein Filterelement aus einem gefalteten Filtermaterial bekannt, bei dem zwei in Umfangsrichtung benachbarte Endfalten des Filtermaterials aneinander befestigt sind.

Die vorliegende Erfindung beschäftigt sich mit dem Problem, für ein Luftfilter bzw. für ein zugehöriges Filterelement eine verbesserte Ausführungsform anzugeben, die sich insbesondere dadurch auszeichnet, dass der Aufwand für die Montage bzw. für die Wartung reduziert ist. Insbesondere sollen die vorstehend genannten Nachteile behoben werden.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, zumindest an einer axialen Endscheibe des Filterelements wenigstens eine Ausrichtkontur vorzusehen, die von der jeweiligen Endscheibe radial und/oder axial absteht. Komplementär dazu besitzt das Filtergehäuse zumindest eine Ausrichtgegenkontur, die mit der Ausrichtkontur des Filterelements zusammenwirkt, derart, dass das Filterelement bezüglich seiner Längsmittelachse ausschließlich in einer vorbestimmten Drehlage ordnungsgemäß in das Filtergehäuse eingesetzt werden kann. Auf diese Weise wird gewährleistet, dass das Filterelement stets mit der gleichen Drehlage im Filtergehäuse positioniert wird. In der Folge ergibt sich auch bei einem Austausch des Filterelements stets die gleiche Relativlage zum Filtergehäuse. Die Ausrichtkontur ist vorzugsweise exzentrisch auf der Endscheibe angeordnet somit ist die erforderliche Orientierung bzw. Lage des Filterelementes in dem Filtergehäuse bei der Montage mit dem bloßen Auge erkennbar bzw. ausrichtbar. Bei anderen Ausgestaltungen sind zwei oder mehrere Ausrichtkonturen und Ausrichtgegenkonturen vorgesehen, welche in der Umfangsrichtung an der Endscheibe in einem nicht rotations-symmetrischen Muster, z.B. in Y-Form, verteilt angeordnet sind. Somit lässt sich das Filterelement auch dann in der erforderlichen Position einsetzen, wenn eine der Ausrichtkonturen beschädigt wurde. Insbesondere können die Ausrichtkonturen über unterschiedliche Abmessungen und/oder Geometrien verfügen, so dass nur die "richtige" Ausrichtkontur in die dafür vorgesehene Ausrichtgegenkontur eingesetzt werden kann.

Die Ausrichtgegenkontur kann ausschließlich in einem der Gehäuseteile ausgebildet sein. Bei anderen Ausgestaltungen kann die Ausrichtgegenkontur auch in beiden Gehäuseteilen vorgesehen sein. Hierbei verfügt dann jedes Gehäuseteil über eine Teilgeometrie der Ausrichtgegenkontur und bilden dann beide Gehäuseteile gemeinsam die Ausrichtgegenkontur. Es ist vorteilhaft, wenn die Ausrichtgegenkontur hierbei in der Formtrennungsebene liegt. Somit können die erforderlichen Geometrien hinterschnittfrei realisiert werden.

Erfindungsgemäß ist vorgesehen, dass die Ausrichtkontur und die aneinander befestigten Endfalten beim Herstellen des Filterelements relativ zueinander so positioniert werden, dass die Ausrichtkontur und die Endfalten in Umfangsrichtung einen Winkel einschließen, der in einem vorbestimmten Winkelbereich liegt. Der vorbestimmte Winkelbereich ist vergleichsweise eng. Insbesondere können die Grenzen dieses Winkelbereichs maximal 20° oder maximal 15° oder maximal 10° voneinander entfernt sein. Ebenso kann der Winkel zwischen der Ausrichtkontur und den Endfalten einen vorbestimmten Winkel aufweisen, der jedoch toleranzbedingt gewissen Schwankungen unterworfen ist und dementsprechend ebenfalls in einem Winkelbereich liegt. Der vorbestimmte Winkel kann insbesondere auch den Wert 0° besitzen, so dass die Ausrichtkontur und die Endfalten zueinander fluchtend ausgerichtet sind. Im Übrigen ist für den Winkel jeder Wert zwischen 0° und 360° denkbar, vorzugsweise 90° oder 135° oder 180°.

Durch diese Vorgehensweise ergibt sich für jedes Filterelement zwangsläufig die gleiche oder zumindest eine sehr ähnliche winkelmäßige Ausrichtung zwischen der Ausrichtkontur und den aneinander befestigten Endfalten des Filtermaterials. Hierdurch wird erreicht, dass auch bei einem Austausch des Filterelements stromab davon stets die gleichen oder sehr ähnlichen Strömungsverhältnisse auftreten. Insbesondere kann im Falle eines relativ nah am Filterelement angeordneten Luftmassensensor eine erneute Kalibrierung bei einem Austausch des Filterelements entfallen. Ebenso ist es auch bei einer Erstmontage möglich, einen bereits kalibrierten Luftmassensensor einzubauen, da die Drehlage, mit welcher das Filterelement im Luftfiltergehäuse angeordnet wird, durch die Korrelation zwischen der Position der Endfalten und der Position der Ausrichtkontur gezielt so gewählt werden kann, dass der Einfluss der inhomogenen Durchströmung des Filterkörpers auf den Luftmassensensor reduziert bzw. minimiert ist oder bereits im Vorfeld durch eine Adaption der Kalibrierung an die bekannte Einbaulage des Filterelements berücksichtigt werden kann.

Gemäß einer anderen vorteilhaften Ausführungsform kann die Ausrichtkontur durch eine radial und axial nach außen von der jeweiligen Endscheibe abstehende Ausrichtnase gebildet sein. Dabei kann die Ausrichtkontur insbesondere an der jeweiligen Endscheibe integral ausgeformt sein oder fest auf diese aufgebracht. Das Anformen einer Ausrichtnase lässt sich bei der Herstellung der jeweiligen Endscheibe besonders einfach berücksichtigen.

Gemäß einer weiteren besonders vorteilhaften Ausführungsform können die Endfalten durch zumindest eine Klammer aneinander befestigt sein, wobei zweckmäßig vorgesehen sein kann, die jeweilige Klammer aus Metall, insbesondere aus einem magnetisch detektierbaren Metall, herzustellen. Klammern lassen sich vergleichsweise einfach an den Endfalten anbringen. Metallische Klammern lassen sich beim Recyceln der Filterelemente einfach vom Kunststoff des Filtermaterials und der Endscheiben trennen. Insbesondere bleiben die Metallklammern beim Veraschen der Filterelemente übrig. Magnetisch detektierbare Metalle, insbesondere ferromagnetische Metalle, vereinfachen bei der Herstellung der Filterelemente eine automatische Ausrichtung der geklammerten Endfalten bezüglich der Ausrichtkontur der jeweiligen Endscheibe. Insbesondere kann dadurch die automatische Fertigung vereinfacht werden.

Das Filtergehäuse kann so konfiguriert sein, dass es das Filterelement vollständig umschließt. Die Ausrichtgegenkontur ist dann in einer entsprechenden Filterelementaufnahme im Gehäuse ausgebildet.

Bei einer alternativen Ausführungsform kann das Filterelement eine geschlossene Endscheibe aufweisen oder mit einer offenen Endscheibe versehen sein, deren Öffnung mit einem Deckel (dicht) verschlossen ist. Das Filtergehäuse kann nun mit einer zu dieser geschlossenen oder verschlossenen Endscheibe komplementären Gehäuseöffnung ausgestattet sein, die (dicht) verschlossen wird, wenn das Filterelement ordnungsgemäß in das Filtergehäuse eingesetzt wird. Hierdurch wird sichergestellt, dass die Frischluftanlage nur dann ordnungsgemäß funktioniert, wenn genau das für diese Frischluftanlage bzw. für dieses Luftfilter konzipierte Filterelement eingebaut wird. Somit bildet die geschlossene bzw. verschlossene Endscheibe einen Teil des, das Filtermedium umgebenden Filtergehäuses. Hierbei kann die gesamte Endscheibe oder ein Teilabschnitt oder mehrere Teilabschnitte der Endscheibe zur Komplettierung des Filtergehäuses vorgesehen sein.

Die jeweilige Endscheibe bzw. der jeweilige Deckel kann am Filtergehäuse bzw. am Schalenkörper, die das Filtergehäuse bilden, durch Formschluss gehalten sein. Beispielsweise kann ein Öffnungsrand, der die Gehäuseöffnung einfasst, zumindest abschnittsweise eine im Profil U-förmige Aufnahmenut aufweisen, in welche ein Außenrand der Endscheibe bzw. des Deckels radial hineinragt.

Gemäß einer vorteilhaften Ausgestaltung ist die Ausrichtkontur bei eingesetztem Filterelement von außen sichtbar. Insbesondere ist die Ausrichtkontur in dem Bereich der Endscheibe angeordnet, der zur Komplettierung des Filtergehäuses vorgesehen ist. Durch die Verwendung der Endscheibe als Gehäuseteil ist die Ausrichtkontur mit dem bloßen Auge von außen sichtbar. Somit kann die ordnungsgemäße Montage des ordnungsgemäßen Filterelementes ohne zusätzliche Mittel festgestellt werden.

Die Endscheibe verfügt vorzugsweise über eine Dichtfläche, an welcher eine Abdichtung zwischen dem Filterelement und dem Filtergehäuse erzeugt wird. Diese Dichtfläche kann an einer Axial-Stirnfläche der Endscheibe ausgebildet sein und sich an zumindest einem der beiden Gehäuseteile dichtend abstützen. Hierbei ist eine Kunststoff/Kunststoff-Abdichtung ausreichend, da es für die Funktion des Luftfilters unerheblich ist, wenn geringe Leckageströmungen von ungefilterter Luft in den das Filterelement umgebenden Rohbereich eindringen. Bei anderen Ausgestaltungen kann auch eine gesonderte Dichtung vorgesehen sein, die diese Leckageströmungen verhindert. Dies ist insbesondere dann erforderlich, wenn der Bereich um das Filterelement die Reinseite ist.

Die korrespondierende Dichtfläche an dem Gehäuseteil bzw. den Gehäuseteilen kann in einer Aufnahmenut vorgesehen sein, in welche die Endscheibe des Filterelementes eingelegt wird.

Gemäß einer weiteren Ausgestaltung der Erfindung ist die Ausrichtkontur als Montagehilfe, insbesondere als Griff oder Ring, ausgestaltet und erleichtert so die Handhabung des Filterelements bei der De-/Montage.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine Seitenansicht eines Luftfilters,
- Fig. 2: eine Seitenansicht eines Filterelements,
- Fig. 3: eine teilweise geschnittene Axialansicht des Filterelements entsprechend einer Blickrichtung III in Fig. 2,
- Fig. 4: ein vergrößertes Detail IV aus Fig. 2.

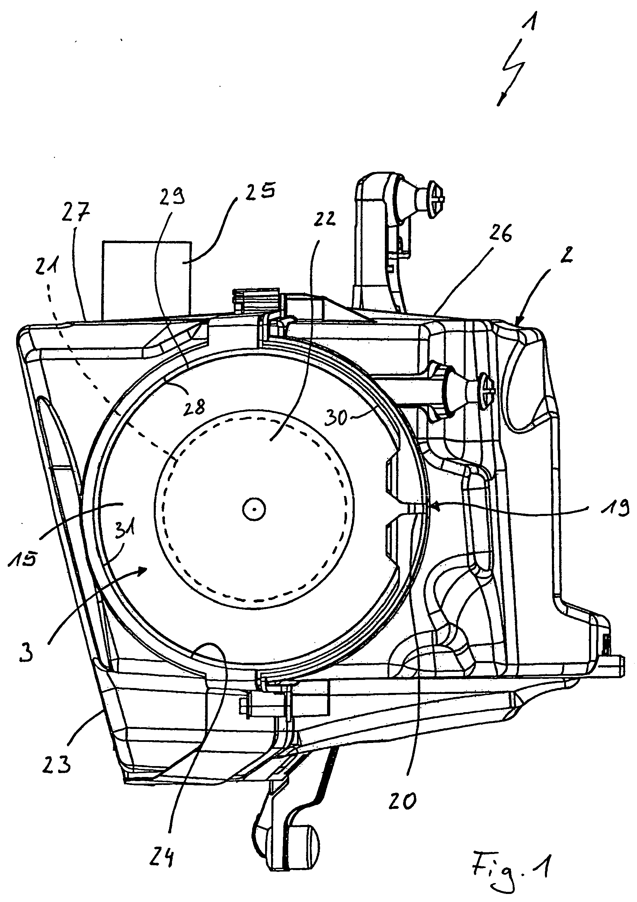

Entsprechend Fig. 1 umfasst ein Luftfilter 1 für eine im Übrigen nicht dargestellte Frischluftanlage einer Brennkraftmaschine, die sich insbesondere in einem Straßenfahrzeug befinden kann, ein Filtergehäuse 2. Das Filtergehäuse 2 dient zur Aufnahme eines Filterelements 3, wobei das Filterelement 3 im Filtergehäuse 2 in üblicher Weise eine Rohseite von einer Reinseite trennt. Im Beispiel ist das Filtergehäuse 2 mehrteilig aufgebaut und umfasst zumindest zwei Schalenkörper 26, 27, die aneinander befestigt sind.

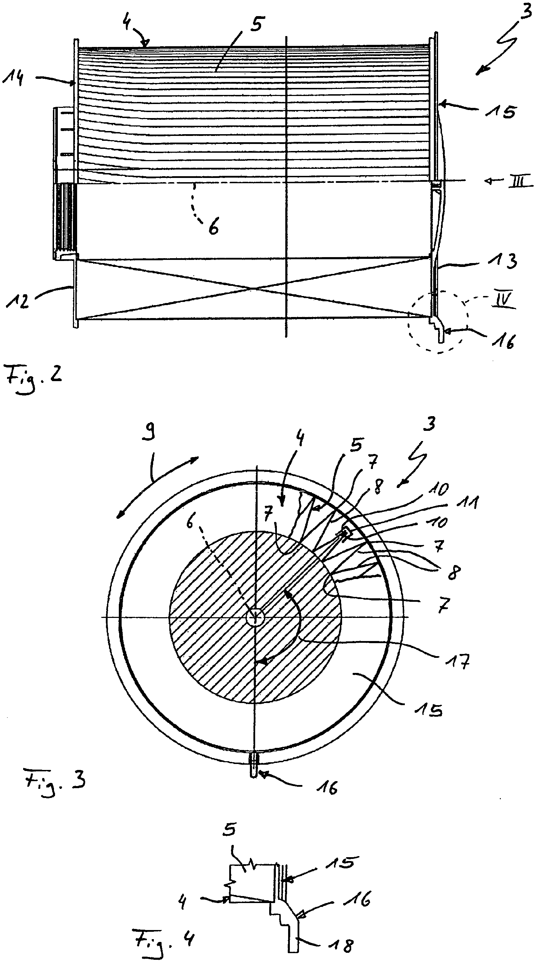

Entsprechend den Fig. 2 bis 4 weist das Filterelement 3, das im Luftfilter 1 verwendet werden kann, einen Filterkörper 4 auf, der ringförmig ausgestaltet ist und aus einem gefalteten Filtermaterial 5 besteht. Der Filterkörper 4 ist insbesondere zylindrisch und vorzugsweise kreiszylindrisch gestaltet. Er besitzt

Das gefaltete Filtermaterial 5 besitzt eine Vielzahl von Falten 7, wobei sich bezüglich der Längsmittelachse 6 innen liegende Falten 7 und außen liegende Falten 7 abwechseln. Zwischen den Falten 7 erstrecken sich flächige Abschnitte 8 des Filtermaterials 5. Die Falten 7 erstrecken sich im Wesentlichen parallel zur Längsmittelachse 6, also axial. In der Umfangsrichtung des Filterkörpers 4, die in Fig. 3 durch einen Doppelpfeil angedeutet und mit 9 bezeichnet ist, treffen zwei Endfalten 10 oder Umfangsenden 10 oder Endabschnitte 10 des Filtermaterials 5 aufeinander. Diese Endfalten 10 sind in der Umfangsrichtung 9 benachbart. Ferner sind sie aneinander befestigt. Die beiden Endfalten 10 sind im Beispiel der Fig. 3 mittels zumindest einer Klammer 11 aneinander befestigt. Die Klammer 11 kann sich über die gesamte axiale Länge der Endfalten 10 erstrecken. Ebenso ist es möglich, mehrere Klammern 11 vorzusehen, die axial voneinander beabstandet und verteilt entlang der Endfalten 10 angeordnet sind. Zusätzlich oder alternativ zu der wenigstens einen Klammer 11 kann es vorgesehen sein, die Endfalten 10 miteinander zu verschweißen und/oder miteinander zu verkleben.

Das Filterelement 3 besitzt an seinen axialen Stirnseiten 12, 13 je eine Endscheibe 14 bzw. 15. Die jeweilige Endscheibe 14, 15 ist am Filtermaterial 5 befestigt. Bevorzugt wird dabei eine Plastifizierung, bei welcher das Filtermaterial 5 in den Kunststoff der jeweiligen Endscheibe 14, 15 eintaucht und darin eingebettet ist. Alternativ kann auch ein Verkleben oder Verschweißen der jeweiligen Endscheibe 14,15 mit dem Filtermaterial 5 vorgesehen sein.

Zumindest eine der Endscheiben 14, 15, hier die in Fig. 2 rechts gezeigte Endscheibe 15, ist mit zumindest einer Ausrichtkontur 16 ausgestattet. Die Ausrichtkontur 16 steht von der jeweiligen Endscheibe 15 bezüglich der Längsmittelachse 6 radial oder axial oder sowohl radial als auch axial ab. Die mit der Ausrichtkontur 16 ausgestattete Endscheibe 15 ist am Filtermaterial 5 zweckmäßig so angebracht, dass sich eine vorbestimmte Drehlagenbeziehung zwischen der Ausrichtkontur 16 und den Endfalten 10 ergibt. Gemäß Fig. 2 kann zwischen der Ausrichtkontur 16 und den aneinander befestigten Endfalten 10 ein Winkel 17 eingeschlossen sein. Dieser Winkel 17 entspricht dabei einem vorbestimmten Winkel, der bei der Anbringung der Endscheibe 15 eingehalten werden muss. Aufgrund von Herstellungstoleranzen, die eine exakte Einhaltung des vorbestimmten Winkels erschweren, kann der tatsächlich vorliegende Winkel 17 vom gewünschten Soll-Winkel im Rahmen der Herstellungstoleranzen abweichen. Zweckmäßig liegt daher der tatsächlich vorliegende Winkel 17 also der Ist-Winkel 17 in einem vorbestimmten Winkelbereich, der den zuvor genannten vorbestimmten Soll-Winkel mittig enthält und dessen Grenzen maximal 20° voneinander entfernt sind. Bei einer bevorzugten Ausführungsform können die Bereichsgrenzen des vorbestimmten Winkelbereichs maximal 15° oder insbesondere maximal 10° voneinander entfernt sein.

Der vorbestimmte Soll-Winkel kann grundsätzlich jeden Wert zwischen 0° und 360° einnehmen. Bevorzugt wird eine Ausführungsform, bei welcher der Soll-Winkel zwischen der Ausrichtkontur 16 und den aneinander befestigten Endfalten 10 den Wert 0° besitzt. Mit anderen Worten, in diesem Fall fluchten die aneinander befestigten Endfalten 10 mit der Ausrichtkontur 16 radial und/oder axial. Im Beispiel der Fig. 3 ist zur Veranschaulichung rein exemplarisch ein Winkel 17 von etwa 135° dargestellt.

Bei dem hier gezeigten Ausführungsbeispiel ist die Ausrichtkontur 16 durch eine einzige Ausrichtnase 18 gebildet. Diese steht im Beispiel sowohl radial als auch axial nach außen von der jeweiligen Endscheibe 15 ab. Bei einer anderen Ausführungsform kann auch eine nur radial von der Endscheibe 15 abstehende Ausrichtnase 18 vorgesehen sein. Ebenso ist eine Ausführungsform möglich, bei der die Ausrichtnase 18 nur axial von der jeweiligen Endscheibe 15 absteht.

Ferner ist auch eine Ausführungsform denkbar, bei welcher die Ausrichtkontur 16 mehr als eine Ausrichtnase 18 besitzt. Anstelle einer Ausrichtnase 18 kann die Ausrichtkontur 16 auch mit zumindest einer Ausnehmung ausgestattet sein, die dann einer negativ axial bzw. radial abstehenden Kontur entspricht.

Bevorzugt ist die hier gezeigte Ausführungsform, bei welcher die Ausrichtnase 18 sowohl axial als auch radial von der Endscheibe 15 absteht. Die Ausrichtkontur 16 kann an die jeweilige Endscheibe 15 angebaut sein. Besonders vorteilhaft ist eine Ausführungsform, bei welcher die Ausrichtkontur 16 an der jeweiligen Endscheibe 15 integral ausgeformt ist.

Sofern wie hier die Endfalten 10 mit Hilfe zumindest einer Klammer 11 aneinander befestigt sind, kann es zweckmäßig sein, die jeweilige Klammer 11 aus einem Metall herzustellen bzw. mit einem Metallkörper zu versehen. Metallische Klammern zeichnen sich durch eine besonders hohe Formbeständigkeit aus, wodurch es möglich ist, die Endfalten 10 ausschließlich durch die Pressung der jeweiligen Klammer 11 hinreichend dicht aneinander zu befestigen.

Für die Herstellung des hier vorgestellten Filterelements 3 kann es von Vorteil sein, das Metall der Klammer 11 bzw. des an der z. Bsp. aus Kunststoff hergestellten Klammer 11 angebrachten separaten Metallkörpers so zu wählen, dass die Klammer 11 bzw. der genannte Metallkörper magnetisch detektierbar ist. Auf diese Weise kann mit Hilfe einer entsprechenden Sensorik, wie z. Bsp. mittels eines Hallsensors, die exakte Position der Klammer 11 bzw. der Endfalten 10 ermittelt werden, wodurch es während der Herstellung des Filterelements 3 möglich ist, den vorbestimmten Winkel zwischen den Endfalten 10 und der Ausrichtkontur 16 beim Anbringen der mit der Ausrichtkontur 16 ausgestatteten Endscheibe 15 einzuhalten. Insbesondere kann die Position der Endfalten 10 dann automatisch mit Hilfe einer entsprechenden Maschine erkannt werden, so dass auch die Ausrichtung zwischen Filterkörper 4 und Endscheibe 15 automatisch durchgeführt werden kann.

Entsprechend Fig. 1 ist das Filtergehäuse 2 mit zumindest einer Ausrichtgegenkontur 19 ausgestattet, die komplementär zur Ausrichtkontur 16 des Filterelements 3 ausgestaltet ist. Beim Einsetzen des Filterelements 3 wirkt die Ausrichtkontur 16 des Filterelements 3 mit der Ausrichtgegenkontur 19 des Filtergehäuses 2 derart zusammen, dass das Filterelement 3 bezogen auf seine Längsmittelachse 6 nur in einer vorbestimmten Drehlage ordnungsgemäß in das Filtergehäuse 2 eingesetzt werden kann. Sofern die Ausrichtkontur 16 mit einer Ausrichtnase 18 ausgestattet ist, weist die Ausrichtgegenkontur 19 eine komplementär zur Ausrichtnase 18 geformte Nasenaufnahme 20 auf, in welche die Ausrichtnase 18 formschlüssig eingreifen kann, sobald das Filterelement 3 die gewünschte Drehlage besitzt.

Bei anderen Ausführungsformen können auch zwei oder mehr Ausrichtkonturen 16 und dazu komplementäre Ausrichtgegenkonturen 19 vorgesehen sein.

Im Beispiel der Fig. 1 ist die dem Betrachter zugewandte Endscheibe 15 des Filterelements 3 als offene Endscheibe 15 ausgestaltet, die sich ringförmig um eine zentrale Öffnung 21 erstreckt. Diese zentrale Öffnung 21 ist im gezeigten Beispiel der Fig. 1 mit Hilfe eines Deckels 22 verschlossen, der bspw. axial von außen auf die Endscheibe 15 aufgesteckt und damit insbesondere verclipst ist. Dabei kann insbesondere vorgesehen sein, zwischen dem Deckel 22 und der Endscheibe 15 eine Dichtung vorzusehen, um eine Falschluftansaugung durch die Öffnung 21 zu vermeiden. Anstelle einer offenen Endscheibe 15, deren Öffnung 21 mit einem Deckel 22 verschlossen ist, kann auch eine geschlossene Endscheibe 15 verwendet werden, die keine zentrale Öffnung 21 aufweist.

Bei dem in Fig. 1 gezeigten Beispiel ist das Filtergehäuse 2 in seiner Außenhaut 23 mit einer Gehäuseöffnung 24 ausgestattet, die komplementär zur Endscheibe 15 geformt ist. Dabei ist die Form der Gehäuseöffnung 24 derart an die Form der Endscheibe 15 angepasst, dass die Endscheibe 15 die Gehäuseöffnung 24 ausreichend dicht verschließt, wenn das Filterelement 3 ordnungsgemäß in das Filtergehäuse 2 eingesetzt ist. Insbesondere kann hierzu eine entsprechende Dichtung zwischen dem Gehäuse 2 und der Endscheibe 15 vorgesehen sein. Sofern die mit der Ausrichtkontur 16 ausgestattete Endscheibe 15 die Gehäuseöffnung 24 verschließt, ist die Ausrichtgegenkontur 19 im Bereich der Gehäuseöffnung 24 angeordnet. Insbesondere kann die Ausrichtgegenkontur 19 am Filtergehäuse 2 integral ausgeformt sein. Beispielsweise kann das Filtergehäuse 2 durch ein einteiliges oder mehrteiliges Spritzgussbauteil gebildet sein.

Sofern - wie hier - mehrere Gehäuseteile 26, 27 bzw. Schalenkörper 26, 27 vorgesehen sind, kann ein Öffnungsrand 28, der die Gehäuseöffnung 24 in der Umfangsrichtung geschlossen umschließt, ein U-förmiges Profil aufweisen, das radial offen ist und in das ein Außenrand 29 der Endscheibe 15 oder des Deckels 22, falls dieser radial über die Endscheibe 15 vorsteht, radial eingreift. Im Beispiels sind zwei Umfangsabschnitte 30, 31 vorgesehen, die sich jeweils über etwa 180° erstrecken, die jeweils das U-Profil tragen und die jeweils an einem der Schalenkörper 26, 27 ausgebildet sind.

Bei einer alternativen Ausführungsform kann das Filtergehäuse 2 so konzipiert sein, dass es das Filterelement 3 vollständig umschließt. Die Ausrichtgegenkontur 19 ist dann im Inneren des Gehäuses 2 ausgebildet, wobei auch dort eine integrale Ausformung der Ausrichtgegenkontur 19 am Filtergehäuse 2 möglich ist.

Auf der Reinseite des Filtergehäuses 2 kann ein Luftmassensensor 25 angeordnet sein, mit dessen Hilfe im Betrieb der Frischluftanlage die in der Frischluftanlage strömende Frischluftmenge ermittelt werden kann. Insbesondere handelt es sich bei einem derartigen Luftmassensensor 25 um einen Heißfilmmesser. Der Luftmassensensor 25 kann dabei stromab des Filtergehäuses 2 in der Frischluftanlage angeordnet sein. Besonders zweckmäßig ist jedoch eine Ausführungsform, bei welcher der Luftmassensensor 25 unmittelbar am Filtergehäuse 2 angeordnet und insbesondere auch am Filtergehäuse 2 befestigt ist. Hierdurch ist der Luftmassensensor 25 vergleichsweise nahe am Filterelement 3 positioniert, so dass es auf die relative Drehlage des Filterelements 3 bezüglich des Gehäuses 2 und dadurch bezüglich des Luftmassensensors 25 ankommen kann. Durch die vorgegebene Korrelation zwischen der Ausrichtkontur 16 und den Endfalten 10 ergibt sich in Verbindung mit der vorgegebenen Position der Ausrichtgegenkontur 19 sowie in Verbindung mit der vorgesehenen Positionierung des Luftmassensensors 25 bezüglich des Filtergehäuses 2 stets eine gleiche Relation zwischen den Endfalten 10 und dem Luftmassensensor 25. Hierdurch ist es einerseits möglich, die Position der Endfalten 10 im Filtergehäuse 2 so zu wählen, dass ihr Einfluss auf die den Luftmassensensor 25 erreichende Strömung reduziert oder vernachlässigbar ist. Andererseits ist es ebenso möglich, den Luftmassensensor 25 im Vorfeld auf die vorgegebene Einbaulage der Endfalten 10 abzugleichen. Dieser Abgleich kann z.B. bereits vor der Montage des Luftmassensensors 25 an einem Reverenzaufbau durchgeführt werden, bei dem die Endfalten 10 die gewünschte Soll-Lage bezüglich des Gehäuses 2 und somit bezüglich des Luftmassensensors 25 aufweisen.

## Patentansprüche

1. Filterelement, insbesondere für ein Luftfilter (1) einer Frischluftanlage einer Brennkraftmaschine,
- mit einem ringförmigen Filterkörper (4) aus einem Filtermaterial (5),
- mit zumindest einer Endscheibe (14, 15), die an einer axialen Stirnseite (12, 13) des Filterkörpers (4) am Filtermaterial (5) befestigt ist,
- wobei zumindest eine solche Endscheibe (15) wenigstens eine von der jeweiligen Endscheibe (15) radial und/oder axial abstehende Ausrichtkontur (16) aufweist,
**dadurch gekennzeichnet,**
- **dass** das Filtermaterial (5) gefaltet ist,
- **dass** zwei in Umfangsrichtung (9) benachbarte Endfalten (10) des Filtermaterials (5) aneinander befestigt sind,
- **dass** die Ausrichtkontur (16) und die aneinander befestigten Endfalten (10) in Umfangsrichtung (9) einen Winkel (17) einschließen, der einem vorbestimmten Winkel entspricht oder der in einem vorbestimmten Winkelbereich liegt, dessen Grenzen maximal 20° oder 15° oder 10° voneinander entfernt sind.

2. Filterelement nach Anspruch 1,
**dadurch gekennzeichnet,**
**dass** die Ausrichtkontur (16) durch eine radial und/oder axial nach außen von der jeweiligen Endscheibe (15) abstehende Ausrichtnase (18) gebildet ist.

3. Filterelement nach einem der Ansprüche 1 und 2,
**dadurch gekennzeichnet,**
**dass** die Ausrichtkontur (16) an der jeweiligen Endscheibe (15) integral ausgeformt ist.

4. Filterelement nach einem der Ansprüche 1 bis 3,
**dadurch gekennzeichnet,**
**dass** die Endfalten (10) durch zumindest eine Klammer (11) aneinander befestigt sind,

5. Filterement nach Anspruch 4,
**dadurch gekennzeichnet,**
**dass** die jeweilige Klammer (11) aus Metall, insbesondere aus einem magnetisch detektierbaren Metall, besteht oder einen Körper aus Metall, insbesondere aus einem magnetisch detektierbaren Metall, aufweist.

6. Luftfilter für eine Frischluftanlage einer Brennkraftmaschine, insbesondere in einem Straßenfahrzeug,
- mit einem Filtergehäuse (2), in dem ein Filterelement (3) nach einem der Ansprüche 1 bis 5 angeordnet ist und eine Rohseite von einer Reinseite trennt,
- wobei das Filtergehäuse (2) wenigstens eine Ausrichtgegenkontur (19) aufweist, die komplementär zur Ausrichtkontur (16) des Filterelements (3) ausgestaltet ist und mit dieser so zusammenwirkt, dass das Filterelement (3) bezüglich seiner Längsmittelachse (6) nur in einer vorbestimmten Drehlage ordnungsgemäß in das Filtergehäuse (2) einsetzbar ist.

7. Luftfilter nach Anspruch 6,
**dadurch gekennzeichnet,**
**dass** auf der Reinseite des Filtergehäuses (2) ein Luftmassensensor (25) angeordnet ist.

8. Luftfilter nach Anspruch 7,
**dadurch gekennzeichnet,**
**dass** der Luftmassensensor (25) am oder im Filtergehäuse (2) angeordnet und insbesondere am Filtergehäuse (2) befestigt ist.

9. Luftfilter nach einem der Ansprüche 6 bis 8,
**dadurch gekennzeichnet,**
**dass** das Filtergehäuse (2) das Filterelement (3) vollständig umschließt.

10. Luftfilter nach einem der Ansprüche 6 bis 8,
**dadurch gekennzeichnet,**
**dass** das Filterelement (3) eine geschlossene Endscheibe (15) oder eine offene Endscheibe (15), deren Öffnung (21) mit einem Deckel (22) verschlossen ist, aufweist, die eine dazu komplementäre Gehäuseöffnung (24) des Filtergehäuses (2) verschließt, wenn das Filterelement (3) ordnungsgemäß in das Filtergehäuse (2) eingesetzt ist.

11. Luftfilter nach Anspruch 10,
**dadurch gekennzeichnet,**
**dass** die Ausrichtgegenkontur (19) im Bereich der Gehäuseöffnung (24) angeordnet ist.

12. Luftfilter nach Anspruch 11,
**dadurch gekennzeichnet,**
**dass** die Ausrichtgegenkontur (19) am Filtergehäuse (2) integral ausgeformt ist.

## Claims

1. Filter element, in particular for an air filter (1) of a fresh air system of an internal combustion engine, comprising:
- an annular filter body (4) made from a filter material (5),
- at least one end disc (14, 15) which is secured onto an axial end face (12, 13) of the filter body (4) on the filter material (5),
- wherein at least one such end disc (15) has at least one alignment contour (16) protruding radially and/or axially from the respective end disc (15),
**characterised in that**
- the filter material (5) is folded,
- two end folds (10) of the filter material (5) adjacent to one another in circumferential direction (9) are secured to one another
- the alignment contour (16) and the end folds (10) secured to one other form an angle (17) in circumferential direction (9) which corresponds to a predetermined angle or is within a predefined angular range, the limits of which are a maximum of 20° or 15° or 10° apart.

2. Filter element according to claim 1, **characterised in that** the alignment contour (16) is formed by an alignment nose (18) projecting radially and/or axially outwards from the respective end disc (15).

3. Filter element according to either claim 1 or claim 2, **characterised in that** the alignment contour (16) is formed integrally on the respective end disc (15).

4. Filter element according to any one of claims 1 to 3, **characterised in that** the end folds (10) are secured to one another by at least one clip (11).

5. Filter element according to claim 4, **characterised in that** the respective clip (11) is made of metal, in particular from a magnetically detectable metal, or has a body made of metal, in particular a magnetically detectable metal.

6. Air filter for a fresh air system of an internal combustion engine, in particular in a road vehicle, comprising
- a filter housing (2) in which a filter element (3) according to any one of claims 1 to 5 is arranged, and which separates a dirty side from a clean side,
- wherein the filter housing (2) comprises at least one alignment counter-contour (19) which is configured to be complementary to the alignment contour (16) of the filter element (3) and cooperates with the latter so that the filter element (3) is only able to be inserted correctly into the filter housing (2) in a predetermined rotational position with respect to its longitudinal central axis (6).

7. Air filter according to claim 6, **characterised in that** an air-flow sensor (25) is arranged on the clean side of the filter housing (2).

8. Air filter according to claim 7, **characterised in that** the air-flow sensor (25) is arranged on or in the filter housing (2) and is secured in particular onto the filter housing (2).

9. Air filter according to any one of claims 6 to 8, **characterised in that** the filter housing (2) completely surrounds the filter element (3).

10. Air filter according to any one of claims 6 to 8, **characterised in that** the filter element (3) comprises a closed end disc (15) or an open end disc (15), the opening (21) of which is closed by a lid (22) which closes a complementary housing opening (24) of the filter housing (2) when the filter element (3) is inserted correctly into the filter housing (2).

11. Air filter according to claim 10, **characterised in that** the alignment counter-contour (19) is arranged in the region of the housing opening (24).

12. Air filter according to claim 11, **characterised in that** the alignment counter-contour (19) is formed integrally on the filter housing (2).

## Revendications

1. Elément filtrant, en particulier pour un filtre à air (1) d'un système à air frais d'un moteur à combustion interne,
- comprenant un corps filtrant (4) de forme annulaire composé d'un matériau filtrant (5),
- comprenant au moins un disque d'extrémité (14, 15), qui est fixé au niveau d'un côté frontal (12, 13) axial du corps filtrant (4) au niveau du matériau filtrant (5),
- au moins un disque d'extrémité (15) de ce type présentant au moins un contour d'alignement (16) faisant saillie de manière radiale et/ou de manière axiale du disque d'extrémité (15) respectif,
**caractérisé en ce**
- **que** le matériau filtrant (5) est plié,
- en ce que deux plis d'extrémité (10), adjacents dans la direction périphérique (9), du matériau filtrant (5) sont fixés l'un à l'autre,
- en ce que le contour d'alignement (16) et les plis d'extrémité (10) fixés l'un à l'autre forment, dans la direction périphérique (9), un angle (17), qui correspond à un angle prédéterminé ou qui est situé dans une plage d'angles prédéterminée, dont les limites sont espacées les unes des autres de maximum 20° ou 15° ou 10°.

2. Elément filtrant selon la revendication 1,
**caractérisé en ce**
**que** le contour d'alignement (16) est formé par un ergot d'alignement (18) faisant saillie de manière radiale et/ou de manière axiale vers l'extérieur du disque d'extrémité (15) respectif.

3. Elément filtrant selon l'une quelconque des revendications 1 et 2,
**caractérisé en ce**
**que** le contour d'alignement (16) est formé de manière intégrale au niveau du disque d'extrémité (15) respectif.

4. Elément filtrant selon l'une quelconque des revendications 1 à 3,
**caractérisé en ce**
**que** les plis d'extrémité (10) sont fixés l'un à l'autre par au moins une attache (11).

5. Elément filtrant selon la revendication 4,
**caractérisé en ce**
**que** l'attache (11) respective est constituée de métal, en particulier d'un métal pouvant être détecté de manière magnétique, ou présente un corps composé d'un métal, en particulier d'un métal pouvant être détecté de manière magnétique.

6. Filtre à air pour un système à air frais d'un moteur à combustion interne, en particulier d'un véhicule de voirie,
- comprenant un boîtier filtrant (2), dans lequel un élément filtrant (3) selon l'une quelconque des revendications 1 à 5 est disposé et sépare un côté brut d'un côté propre,
- le boîtier filtrant (2) présentant au moins un contour complémentaire d'alignement (19), qui est configuré de manière complémentaire par rapport au contour d'alignement (16) de l'élément filtrant (3) et qui coopère avec ce dernier de telle sorte que l'élément filtrant (3) peut être inséré dans le boîtier filtrant(2) en bonne et due forme uniquement dans une position de rotation prédéterminée par rapport à son axe central longitudinal (6).

7. Filtre à air selon la revendication 6,
**caractérisé en ce**
**qu'**un capteur de masses d'air (25) est disposé sur le côté propre du boîtier filtrant (2).

8. Filtre à air selon la revendication 7,
**caractérisé en ce**
**que** le capteur de masses d'air (25) est disposé au niveau du boîtier filtrant (2) ou dans ce dernier et est fixé en particulier au niveau du boîtier filtrant (2).

9. Filtre à air selon l'une quelconque des revendications 6 à 8,
**caractérisé en ce**
**que** le boîtier filtrant (2) entoure en totalité l'élément filtrant (3).

10. Filtre à air selon l'une quelconque des revendications 6 à 8,
**caractérisé en ce**
**que** l'élément filtrant (3) présente un disque d'extrémité (15) fermé ou un disque d'extrémité (15) ouvert, dont l'ouverture (21) est fermée par un couvercle (22), qui ferme une ouverture de boîtier (24) complémentaire du boîtier filtrant (2) lorsque l'élément filtrant (3) est inséré en bonne et due forme dans le boîtier filtrant (2).

11. Filtre à air selon la revendication 10,
**caractérisé en ce**
**que** le contour complémentaire d'alignement (19) est disposé dans la zone de l'ouverture de boîtier (24).

12. Filtre à air selon la revendication 11,
**caractérisé en ce**
**que** le contour complémentaire d'alignement (19) est formé de manière intégrale au niveau du boîtier filtrant (2).
